# EUROPEAN PATENT APPLICATION

(11) **EP 4 403 043 A1**
(43) Date of publication of application: **24.07.2024**
(21) Application number: 24152830.6
(22) Date of filing: 19.01.2024
(51) Int. Cl.: A23L 31/10, A21D 8/04, A23L 33/14

(54) **LEAVENING COMPOSITION FOR THE INDUSTRIAL PRODUCTION OF BAKED PRODUCTS WITH EXCELLENT ORGANOLEPTIC PROPERTIES**

(30) Priority: 20.01.2023 IT 202300000840
(71) Applicant: Deimos Srl, 20093 Cologno Monzese (MI) (IT)
(72) Inventor: GROSS, Riccardo, 20093 Cologno Monzese (MI) (IT); BIASIBETTI, Matteo, 20093 Cologno Monzese (MI) (IT); LODIGIANI, Fabio, 20093 Cologno Monzese (MI) (IT)
(74) Representative: Marchioro, Paolo

(57) **Abstract**

The present invention is in the field of yeasts and, specifically, yeast compositions, with particular reference to yeast compositions used in the baked products field.

An object of the present invention is a yeast composition comprising the combination or consisting of the combination of at least two yeasts selected from the species listed below or belonging to other non*-Saccharomyces* yeast species:
*- Kluyveromyces marxianus,*
*- Kazachstania humilis,*
*- Kazachstania exigua,*
*- Torulaspora delbrueckii,*
*- Lanchancea thermotolerans.*

## Description

### Technical Field

The present invention is in the field of yeasts and, specifically, yeast compositions, with particular reference to yeast compositions used in the field of baked products.

### Background of the Invention

The modern consumer increasingly needs to look for a satisfying sensory perception in food products that fulfils his or her emotions.

In the field of baked products, such as bread, pizzas, leavened cakes, etc., the use of sourdough, instead of only common brewer's yeast (*Saccharomyces cerevisiae*), allows an aromatic characteristic to be given to the leavened product and the perception of a natural, pleasant and traditional product, made "like in the olden days" to be conveyed to the consumer.

Sourdough is a complex microbial culture consisting of numerous species and strains of lactic acid bacteria and yeasts, which, with their multiple metabolic activities on sugars, proteins and lipids, contribute to the sensory and nutritional quality and shelf life of the baked products made from it. Precisely because of its complexity and the fragile qualitative and quantitative balances that are established between the different microbial species and the different microbial strains, sourdough is not easy to manage; on the one hand, fermentation times with sourdough are significantly longer than the fermentation times of a dough inoculated with brewer's yeast alone, and on the other hand, sourdough be continuously and frequently refreshed in order to ensure adequate and constant functional activities.

The creation of fresh sourdough starter therefore involves a series of procedures that contribute to the creation of a "dough" rich in micro-organisms and aromatic molecules that characterise the product; it is the combination of these micro-organisms, derived from the flours and the processing environment, and selected by the way refreshments are managed (temperature, timing, frequency, quantity of flour added), that is the key element at the basis of the unique quality and typical characteristics of baked leavened products (bread, pizza and cakes) obtained with sourdough starter. All the aforementioned procedures, which imply continuous, constant and careful management of raw materials, storage times and processing/refreshing times, if carried out on a small scale, are manageable by a single operator; if, on the other hand, these procedures are set up in more structured settings, such as industrial-type ones, their management becomes very complex, both in terms of the acquisition of know-how and application implementation, which is not always easy and immediate to implement and transmit. Furthermore, knowledge of refreshment times and workability of the product is generally passed from generation to generation with the risk of losing, in some cases, a history and consistency of performance and quality that is difficult to replicate. Working with sourdough thus requires organisation of activities and timeframes that are not always compatible with industrial settings, especially if it is not possible to manage the various refreshments of the yeast on a continuous basis; it is no coincidence that the production of traditional breads and cakes with sourdough is nowadays practised mainly in small workshops and artisan bakeries, rather than in large-scale industry. It should also be pointed out that, while the compositional complexity of the sourdough starter is at the basis of the sensory complexity of the products obtained with it, it is also an element of weakness since the balance between the different micro-organisms constituting the sourdough starter is very fragile and subject to change in relation to various external factors; this could lead to an inconsistent sensory quality of the product, not in line with the expectations of the consumer and the food industry.

### Description of the invention

The technical problem addressed by the present invention is therefore that of making available a leavening composition that can also, and above all, be used at industrial level, so that companies producing bread, pizzas and cakes, even by means of continuous industrial processes, can produce finished products with a distinct and complex sensory profile, comparable to that obtained with sourdough starter, without, however, having to manage the laborious and delicate preparation and refreshment procedures typical of said microbial culture.

The use of yeasts in breadmaking that can provide the product with specific aromatic characteristics can also contribute to the diversification and innovation of the baked product.

With reference to the problems plaguing the bakery industry, in addition to solving the problem of practicality of scaling and industrialisation, the product according to the invention must also meet the following multiple functional characteristics:
- it must consist of micro-organisms with high metabolic potential, capable of characterising the products obtained sensorially, increasing their aromatic complexity in a similar way to when using sourdough starter;
- it must be easy to use (preferably, it must be in powder form, e.g. in flour form that can be weighed and dosed);
- it must be easy to store (bag in cold storage at +4°C) and have an extended shelf life, compatible with distribution and production requirements;
- it must be easy to manage (times and conditions of use defined in relation to the type of product, without the need for a personal and therefore subjective technological interpretation).

All of the aforementioned problems and needs are solved by the composition of the present invention as set out in the claims, the definitions of which form an integral part of the present description.

An object of the present invention is therefore a yeast composition comprising the combination or consisting of the combination of at least two yeasts selected from the species listed below or belonging to other non-*Saccharomyces* yeast species:
- *Kluyveromyces marxianus,*
- *Kazachstania humilis,*
- *Kazachstania exigua,*
- *Torulaspora delbrueckii,*
- *Lanchancea thermotolerans.*

Further objects of the present invention are a process for the preparation of said composition, a process for the preparation of baked products, a dough comprising said composition, and the use of said composition for the preparation of baked products.

### Brief description of the figures

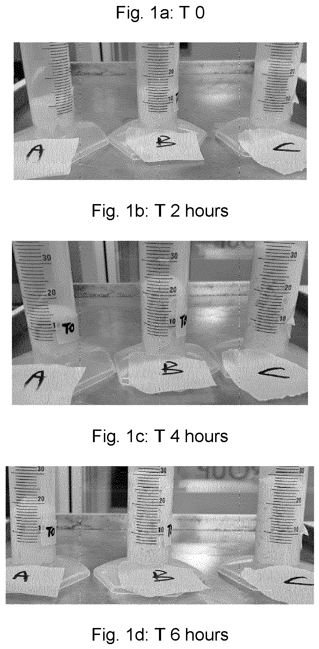

Figures 1a-1d illustrate the good gassing power of the yeast composition of the invention, a characteristic that depends on the type of yeast but also on its viability within the composition used.
Specifically, Figure 1a refers to the situation at time zero, Figure 1b to the situation after 2 hours, Figure 1c to the situation after 4 hours and Figure 1d to the situation after 6 hours of incubation of the dough inoculated with the yeast composition at 30°C and 75% relative humidity. The abbreviations A, B and C indicate the dosage percentages of the composition (2%, 5%, 10% w/w).
Figures 2a, 2b, 2c show visual aspects of the bread prepared employing the composition of the invention using the direct method.
Figures 3a, 3b, 3c, 3d show visual aspects of the pizza prepared employing the composition of the invention using the direct method.
Figures 4a, 4b, 4c show visual aspects of the focaccia prepared employing the composition of the invention using the direct method.
Figures 5a, 5b show visual aspects of the dry snacks prepared employing the composition of the invention using the direct method.
Figures 6a, 6b show visual aspects of the sandwich bread (loaf) prepared employing the composition of the invention using the indirect method.
Figures 7a, 7b show visual aspects of the dish pizza prepared employing the composition of the invention using the indirect method.
Figures 8a, 8b show visual aspects of the focaccia prepared employing the composition of the invention using the indirect method.
Figures 9a, 9b show visual aspects of the dry snacks prepared employing the composition of the invention using the indirect method.
Figure 10 shows Table 4 referred to in the various examples.
Figure 11 shows the dough inoculated with *Kluyveromyces marxianus,* time T0.
Figure 12 shows the dough inoculated with *Kluyveromyces marxianus,* after 18 hours of incubation at 30°C.
Figure 13 shows bread obtained with only yeast *Kluyveromyces marxianus.*

### Detailed description of the invention

The product of the present invention is a yeast composition comprising the combination or consisting of the combination of at least two yeasts selected from the species listed below or belonging to other non*-Saccharomyces* yeast species:
- *Kluyveromyces marxianus,*
- *Kazachstania humilis,*
- *Kazachstania exigua,*
- *Torulaspora delbrueckii,*
- *Lanchancea thermotolerans.*

In fact, it was found that the yeast composition of the invention is a combination of yeasts such as to allow the industrial production of baked products with organoleptic and chemical/physical characteristics that are better than those of baked products made with brewer's yeast alone, and comparable to those obtained using sourdough.

Moreover, said leavening composition is such that:
1) the metabolic activities of the individual strains can develop a complexity of secondary and tertiary aromas and metabolites that can significantly characterise and/or enhance the sensory characteristics of the final product;
2) the technological performance in terms of gassing activity is comparable to that of the *Saccharomyces* yeasts typical of industrial production, enabling the realisation of a quicker and more easily manageable industrial process compared to production processes using sourdough.

The yeast composition includes or consists of a mixture of at least two of the aforementioned yeasts, where these yeasts do not belong to the species *Saccharomyces cerevisiae,* commonly used in leavening processes.

Yeasts belonging to species commonly found in plant matrices were selected to characterise the sensory properties of the final product.

The use of a mixture of strains instead of a single strain allows the several different metabolic activities to take place, thus expanding the spectrum of flavouring substances, antimicrobial metabolites and other functional molecules derived from these activities.

Selected species that can be used in the composition according to the invention are non*-Saccharomyces* yeast species such as:
- *Kluyveromyces marxianus,*
- *Kazachstania humilis,*
- *Kazachstania exigua,*
- *Torulaspora delbrueckii,*
- *Lanchancea thermotolerans.*

These species are characterised by good gassing power (particularly evident in *Kazachstania humilis*), aromatic complexity, alcohol tolerance, capacity to use different types of sugar, and capacity to produce organic acids.

There are already examples of the application of yeasts of the species *Kluyveromyces marxianus* in the production of baked products, but they concern its use alone or in association with *Saccharomyces cerevisiae* (WO2013156703 Baked goods containing *Kluyveromyces marxianus* or *Kluyveromyces lactis*)*.*

However, the Applicant believes there are no evidence of the application of the yeast *Klyveromyces marxianus* in mixed cultures in association with other non*-Saccharomyces* yeasts.

The consideration of non-conventional yeasts (non*-Saccharomyces* yeasts) in the composition of the invention was dictated by the fact that several non*-Saccharomyces* yeast species used in the oenological field showed very complex and technologically relevant metabolic potentials (production of esters, aldehydes, ketones), unlike *Saccharomyces* yeasts, in particular the common brewer's yeast *Saccharomyces cerevisiae,* which are endowed with a poor capacity to produce flavouring metabolites. In addition to ethanol and carbon dioxide, non*-Saccharomyces* yeasts can produce numerous metabolites; for example, higher alcohols and esters can be produced from branched-chain amino acids, which can have a positive impact on flavour. In particular, even low concentrations of 3-methyl-1-butanol, a superior alcohol derived from the amino acid leucine, contribute fundamentally to the aroma of wheat bread.

It should also be borne in mind that the sensory profile of leavened baked goods is not only due to the presence of volatile substances but is also associated with Maillard reactions between amino acids derived from microbial proteolysis and reducing sugars, the oxidation of fats and the presence of organic acids.

Particularly relevant in terms of sensory impact is the presence of lactic acid and acetic acid, and in particular the ratio of lactic acid to acetic acid, called, in the specific case of sourdough, the quotient of fermentation (QF); a quotient of fermentation less than 5 is considered optimal for the bread's sensory characteristics. The QF is closely related to the ability of microorganisms to produce lactic acid and acetic acid; to this end, one of the criteria for selecting the yeasts in the subject matter of the invention was their ability to produce organic acids, in particular lactic acid and acetic acid, which are characteristic of baked products made with sourdough. While acetic acid production is a common feature of many yeasts (albeit with different efficiencies), lactic acid production is a prerogative of lactic acid bacteria, rather than yeasts. According to a preferred aspect of the invention, the yeast composition comprising the combination of *Kluyveromyces marxianus* and other non-*Saccharomyces* yeast species capable of producing acetic acid, such as those mentioned in the group of yeasts of the present invention, allows for optimal lactic acid and acetic acid values for the sensory profile of the leavened product. Laboratory analysis (determination of organic acids) and sensory evaluation of the products obtained confirm the presence of lactic acid and acetic acid in sufficient quantities to guarantee an optimal "bread aroma".

According to a preferred aspect, the yeast composition includes the yeast *Kluyveromyces marxianus* or *Kluyveromyces marxianus subsp. Fragilis.* According to a preferred aspect, the yeast composition includes the yeast *Kazachstania humilis.*

According to a preferred aspect, the composition comprises the combination or is made up of the combination of at least two yeasts selected from the species listed below:
- *Kluyveromyces marxianus,*
- *Kazachstania humilis,*
- *Kazachstani exigua,*
- *Torulaspora delbrueckii,*
- *Lanchancea thermotolerans.*

According to a more preferred aspect, the yeast composition comprises the yeasts *Kluyveromyces marxianus* and *Kazachstania humilis*; this yeast composition is in fact the one that provides the best acidity profile of the product leavened with said composition.

According to a further preferred aspect, the yeast composition does not comprise yeasts of the *Saccharomyces* genus, and even more preferably the yeast composition does not comprise yeasts of the *Saccharomyces cerevisiae* species.

The composition of the invention may thus comprise, among others, the combination of yeasts *Kluyveromyces marxianus* and *Kazachstania humilis,* or *Kluyveromyces marxianus* and *Torulaspora delbrueckii,* or *Kluyveromyces marxianus* and *Lanchancea thermotolerans,* or *Kluyveromyces marxianus* and *Kazachstania exigua,* or *Kazachstania humilis* and *Torulaspora delbrueckii,* or *Kazachstania humilis* and *Lanchancea thermotolerans,* or *Torulaspora delbrueckii* and *Lanchancea thermotolerans,* or *Kazachstania humilis* and *Kazachstania exigua* or ternary or quaternary mixtures of the above yeasts. According to one aspect, the composition comprises at least one yeast selected from the following list:
- *Kluyveromyces marxianus,*
- *Kazachstania humilis,*
- *Kazachstania exigua,*
- *Torulaspora delbrueckii,*
- *Lanchancea thermotolerans,*
and at least one non*-Saccharomyces* yeast species.

According to an aspect, the composition of the invention comprises *Kluyveromyces marxianus, Kazachstania humilis* and *Torulaspora delbrueckii,* or *Kluyveromyces marxianus, Kazachstania humilis* and *Lanchancea thermotolerans.*

Another object is a process for preparing the yeast composition described above, comprising the following steps:
- for each yeast performing the following steps a) to b):
   a) fermenter biomass production in appropriate culture media;
   b) the biomass from step a) is then concentrated by centrifugation to obtain the biomass in the form of yeast cream;
   c) the yeast creams from step b) are mixed together in the appropriate concentrations and other ingredients are added until a homogeneous dough is obtained;
   d) the dough obtained in step c) is rolled, generating a sheet not less than 10 mm thick;
   e) the sheet of dough obtained in step d) is placed in perforated trays and dried at a temperature of < 28°C and relative humidity less than or equal to 30% for a maximum cycle of 48 hours until the product reaches a final moisture content of less than 35% by weight;
   f) the product of step e) is unloaded, crushed and packaged.

A further innovative aspect of the present invention relates in fact to the process for preparing the yeast composition, which is linked to simplicity and practicality of use. A fundamental element is obviously the stability of the culture, i.e. the possibility of keeping it alive and viable over time, reducing those continuous reproduction operations (refreshments) typical of sourdough, which are laborious and, if not correctly managed, can lead to an impoverishment of the culture and a reduction in its performance. For this purpose, a very gentle drying technology was developed, carried out at a low temperature (<28°C) in order to preserve the viability of the cells as much as possible. Not all stabilisation technologies by dehydration are able to adequately preserve yeast viability; freeze-drying for example, as well as drying at temperatures above 30°C, can drastically reduce the viable yeast population. Freeze-drying, in particular, is a very expensive process in terms of both implantation and operating costs and requires the use of cryoprotective agents to limit the loss of cell viability.

The above process begins with the production of the biomass in a fermenter in culture media and incubation conditions that vary according to the physiological and nutritional characteristics of the different strains; the culture is then concentrated by centrifugation in order to obtain the biomass (yeast cream) destined for the drying process. In the specific case of the yeast *Kluyveromyces marxianus,* since it is a yeast capable of metabolising lactose for energy, the whey from the end of cheese processing or the scum derived from the production of ricotta could be used as a culture medium; these are production waste from the dairy industry, rich in lactose, which could therefore be re-used and "enhanced" through the yeast biomass production process. According to another preferred aspect of the composition preparation process, if the yeast composition includes the yeast *Kluyveromyces marxianus,* in step a) the culture medium could be the whey from the end of cheese processing or the scum derived from the production of ricotta.

The drying process is carried out in a processing room with temperatures not exceeding 28°C.

The production workshop is equipped with tables with weighing scales, kneading machine, rolling machine, drying plant (dryer), packaging area.

The process steps initially involve weighing the two creams and, optionally, the dry part (dried rice flour or dried wheat flour) and then kneading the different elements. This step takes place very quickly (3-4 minutes), which is the time needed to make the dough homogeneous.

In step d), the dough made is rolled, generating a sheet with a thickness of no less than 10 mm in order to allow it to dry within the set time.

In step e), once the rolled dough has been placed in the perforated trays, the drying step is continued at a temperature below 28°C for a cycle lasting no longer than 48 hours.

Once the composition has been obtained and the final moisture content (less than 35%) has been reached, the dough is removed from the trays, and the packaging step begins, which involves first crushing the dried product, then bagging it and storing it at +4°C.

The product, i.e. the yeast composition, once packaged, is placed in cold storage at +4°C.

Therefore, according to a preferred aspect of the composition preparation process, in step c) the other dry ingredients are dried rice flour and/or dried wheat flour.

Another object is a process for the preparation of baked products, according to the direct method, comprising the following steps:
A-1) preparing the dough with a yeast composition as described above;
B-1) leaving the inoculated dough to leaven or ferment at a temperature comprised between 27°C and 33°C and a relative humidity comprised between 65% and 80%;
C-1) baking the inoculated and leavened dough from step B-1 to provide the baked product.

The preparation of the dough in step A-1 may be accomplished by inoculating the dough with a yeast composition as described above.

Leavening conditions must not be below 27°C and must not exceed 33°C with a humidity between 65 and 80%.

According to a preferred aspect of the aforementioned process for the preparation of baked products, in step A-1) the dough is inoculated with a quantity between 2% and 10% by weight of dried yeasts in relation to the total weight of dry flour. The weight of yeasts is the weight of the dry yeasts.

The percentage by weight of use of the yeast composition is indicatively between 2% and 10% of the total weight of dry flour, depending on the leavening time and the intensity of the aromatic aspects.

Another object is a process for the preparation of baked products, according to the indirect method, comprising the following steps:
A1-1) preparing a pre-dough (biga) with a yeast composition as described above;
B1-1) leaving the inoculated pre-dough to leaven or ferment at a temperature comprised between 27°C and 33°C and a relative humidity between 65% and 80%;
C1-1) preparing the final dough comprising biga, flour, water, dry yeast and any other ingredients and leaving it to leaven at 30°C and 75% RH;
D1-1) baking the inoculated and leavened dough from step C-1) to provide the baked product.

Another object is a food inoculum comprising the yeast composition described above.

Another object is a dough for baked products inoculated with the yeast composition described above.

Finally, a further object is the use of the yeast composition described above for the preparation of baked products, preferably for the preparation of bread, pizza, and sweet leavened products.

In particular, it is preferred when the yeast composition described above is used as a food inoculum and/or leavening agent for the preparation of baked products.

### Experimental Section

**Example 1:** Preparation of the composition of yeasts *Kluyveromyces marxianus* and *Kazachstania humilis.*

For the preparation of the composition of dried yeasts *Kluyveromyces marxianus* and *Kazachstania humilis,* it is necessary to start from fresh concentrated biomass of each strain (biomass obtained by centrifugation of a fresh yeast culture reproduced in a specific culture medium). These yeasts are commercially available, e.g. non*-Saccharomyces* yeasts are available from AB Mauri Spa, Tecnofood Italia Srl, Esseco Srl.

The biomass may have a variable concentration of live cells depending on the species and strain of yeast; each yeast may in fact have peculiar biochemical and physiological characteristics, which influence the industrial yield, i.e. the number of viable cells obtained in the industrial yeast cultivation process.

In the present example, the composition of the two yeasts was prepared from a fresh biomass of *Kluyveromyces marxianus* and a fresh biomass of *Kazachstania humilis* with viable cell numbers of 5×10⁹ CFU/g and 2.5×10⁹ CFU/g, respectively. Viable cell counts of each biomass were performed in YM (Yeast and Moulds) agar medium incubated at 25°C in aerobiosis for 3-5 days. The composition of the YM medium was as follows:

| | |
|---|---|
| Peptone | 5 g/l |
| Yeast extract | 3 g/l |
| Malt extract | 3 g/L |
| Dextrose | 10 g/l |
| Agar | 20 g/l |

with final pH 6.2 ± 0.2 at 25°C.

With regard to the presence of possible contaminants, the biomass of each yeast highlighted the following characteristics:
- Non-lactic bacterial load: < 500 CFU/g
- Total lactic acid bacteria: < 500 CFU/g
- *Enterobacteriaceae*: < 10 CFU/g
- Moulds: < 10 CFU/g
- *Escherichia coli*: < 10 CFU/g
- Coagulase-positive staphylococci: < 10 CFU/g
- *Salmonell*a spp: absent in 25 g.

The biomass of each yeast also had a dry matter percentage of over 17%.

Biomasses of *Kluyveromyces marxianus* and *Kazachstania humilis* were then mixed according to this ratio: 40% w/w of *Kluyveromyces marxianus* and 60% w/w of *Kazachstania humilis* so as to obtain for each of the two yeasts optimal concentrations in the order of 1.5-2.0 × 10⁹ CFU/g.

The composition of the two yeasts was stored at a temperature of 0 - 4°C and dried one week after production (Example 2).

Stability assessment tests based on viable cell counts showed that the biomass should be dried no more than two weeks after production. Both freezing and storage at temperatures > 4°C must be avoided as they can lead to a reduction in the viability of the strains.

**Example 2:** Drying of the yeast composition *Kluyveromyces marxianus* and *Kazachstania humilis* prepared in Example 1.

In order to obtain a more stable and easily manageable product for the operators, the yeast cream (*Kluyveromyces marxianus* and *Kazachstania humilis)* obtained in Example 1 was dried. The cream and other ingredients added during drying (dried rice flour and spent culture broths) were used according to these reference values:
- cream of *Kluyveromyces marxianus* and *Kazachstania humilis*: 600 gr
- spent culture broth of *Kluyveromyces marxianus*: 350 gr
- spent culture broth of *Kazachstania humilis*: 350 gr
- dried rice flour: 1700 gr.

Spent culture broths are the culture broths derived from the production of yeast biomass, stripped of the cellular part; they are by-products rich in substances derived from yeast activity that can be added as they act as support/protection to the yeast itself during the drying step.

Dried rice flour, on the other hand, was added in order to facilitate the crushing of the drying product; rice flour is preferred over wheat flour as it is gluten-free and can therefore also be used in gluten-free baked products.

The different components were mixed sequentially; starting with the cream and the spent broths and then proceeding with the addition of the rice flour; the latter was poured in gradually to obtain a homogeneous and uniform dough. This step was to last no longer than 4 minutes.

Kneading, given the nature of the raw materials, was carried out with a leaf hook which ensured more adequate mixing of the dough, which was characterised by being particularly consistent and dense.

The resulting dough was placed on top of the loading hopper of a dough sheeter, with the aim of obtaining a sheet of 10 to 15 mm thick. The sheet was then transferred to drying frames and kept at a controlled temperature and humidity.

The set drying temperature should never exceed 28°C and the set humidity should not exceed 30%.

For this process, a dryer, model SICC 60 Frigojollyinox, was used at a temperature of 22-24°C and humidity of 10 - 30%.

The drying process lasted 46 hours, i.e. until a final moisture content of around 15% was reached.

Once the product was obtained, it was crushed into easily water-soluble agglomerates and then stored at 4°C in aluminium vacuum bags.

As can be seen in Table 1 showing the results of the drying test with the new method, the process described ensures both a high yeast load after drying and a desired storage humidity.

**Table 1: Results Drying test 3**

| **Thickness** | **Drying time** | **Yeasts CFU/g** | **Humidity %** | **Aw** |
|---|---|---|---|---|
| 10 mm | T 0 | 1 × 10⁹ | 46.6 | 0.972 |
| 10 mm | T 6 hours | 1.2 × 10⁹ | 40.5 | 0.975 |
| 10 mm | T 22 hours | 9 × 10⁸ | 25.6 | 0.976 |
| 10 mm | T 29 hours | 3.6 × 10⁸ | 21 | 0.926 |
| 10 mm | T 46 hours | 1.8 × 10⁸ | 15.3 | 0.785 |

The drying method according to the invention is an improvement over other drying methods. In particular, compared to the static frame drying method, traditionally used for long-drying of dry pasta, with temperature parameters set to 30°C and humidity to 30 - 50%, and compared to the method of drying in a static cell at a temperature below 25°C and uncontrolled humidity, the new drying process allows a finished product characterised by a higher concentration of live and viable yeasts and lower humidity, the latter being a relevant factor for product shelf life.

**Example 3:** Shelf life of the dried product.

The shelf life of the dried yeast composition *Kluyveromyces marxianus* and *Kazachstania humilis* was evaluated at different time intervals on the product stored under vacuum at 4°C. In this case, shelf life can be defined as the time interval in which the yeasts remain alive and viable under the storage conditions used.

Yeast viability was verified by plate counts using the culture medium and incubation conditions described in Example 1. Analyses were conducted after 30 and 60 days of storage. The results, shown in the following table, show that the dried culture retains excellent viability under the storage conditions used, confirming the suitability of the drying method. Excessive drying in fact could result in damage to cell structures that could lead to a rapid decay of yeast viability during shelf life.

| **Storage time** | **Total yeasts CFU/g** |
|---|---|
| T 0 (freshly packaged product) | 183,000,000 |
| T 30 days | 150,000,000 |
| T 60 days | 130,000,000 |

**Example 4:** Functional characteristics of the dough obtained with the dried yeast.

The dough obtained by mixing the dried yeast cream from Example 2 with flour and water (hereinafter referred to as LMSV) was evaluated for certain functional characteristics, which are important for the quality of the baked products.

In particular, the following parameters were considered:
- leavening capacity,
- pH,
- the amount of acetic and lactic acid produced.

### Leavening capacity

The leavening capacity was studied by adding the dough into a graduated cylinder and evaluating the increase in volume over time.

In more detail, a dough with a known mass (12 gr) was placed in a 100 ml graduated cylinder and lightly pressed to have a similar starting level on all cylinders.

3 tests (A, B and C) were set up using 3 different quantities of LMSV as shown in Table 2.

**Table 2**

| **Ingredients** | **A** | **B** | **C** |
|---|---|---|---|
| Flour type | 50 g | 50 g | 50 g |
| 0 - 200W | | | |
| Water 23°C | 30 g | 30 g | 30 g |
| LMSV | 1 g | 2.5 g | 5 g |

The three 12 gr pieces of dough placed inside the cylinder were covered with plastic film and placed in the leavening cell at 30°C and 75% humidity.

As expected, the leavening capacity, i.e. the increase in volume of the dough, and in particular the speed at which the volume increased inside the cylinder, was related to the amount of yeast used. All 3 doughs reached maximum leavening, tripling their volume. However, the time taken to achieve this varied in relation to the amount of yeast in the dough:
- Dough A: triplication of volume in 8 hours
- Dough B: triplication of volume in 6 hours
- Dough C: triplication of volume in 4 hours.

The data obtained confirm the good gassing power of the yeast composition used, a characteristic that depends on the type of yeast but also on its viability within the composition used.

See Figure 1a: T 0, Figure 1b: T 2 hours, Figure 1c: T 4 hours, Figure 1d: T 6 hours.

With regard to pH values, the following values are observed in doughs A, B and C:
- Dough A: pH of approx. 4.8 after 8 hours of leavening (time for the dough volume to triple);
- Dough B: pH of about 5.0 after 5.5 hours of leavening (time for the dough volume to triple);
- Dough C: pH of about 5.2 after 4 hours of leavening (time for the dough volume to triple).

Extending the incubation to 8 hours also for doughs B and C, similar pH values were observed as for dough A after 8 hours of leavening (between 4.6 and 4.8), confirming the fact that a minimum leavening time is required for adequate sensory development in terms of acidity.

Finally, with regard to lactic acid and acetic acid values, only aliquots of dough B taken after 4, 6 and 8 hours of keeping the dough at 30°C with 75% RH were tested. For the determination of lactic acid and acetic acid, enzymatic absorption methods were used (Megazyme kit). The results obtained are reported in Table 3.

**Table 3**

| | **Lactic acid g/1000 g** | **Acetic acid g/1000 g** |
|---|---|---|
| **Dough B after 4 hours leavening** | 1.40 | 0.89 |
| **Dough B after 6 hours leavening** | 1.96 | 0.78 |
| **Dough B after 8 hours leavening** | 2.81 | 1.39 |

As can be seen in the table, there is a significant presence of lactic acid and acetic acid in the different samples considered with a clear increase in both acids, and in particular lactic acid, from T 4 to T 8. The organic acid profile detected is very different from that of a dough obtained with brewer's yeast alone and is close in terms of the presence of lactic acid and the significant concentration of acetic acid to the organic acid profile typical of sourdough, which is relevant for the sensory characteristics of the leavened product.

The following examples from number 5 to number 12 describe the application of the dried yeast cream obtained as described in Example 2 in the production of various baked products using both the direct method (processing all ingredients in one step) and the indirect method (processing ingredients in two steps).

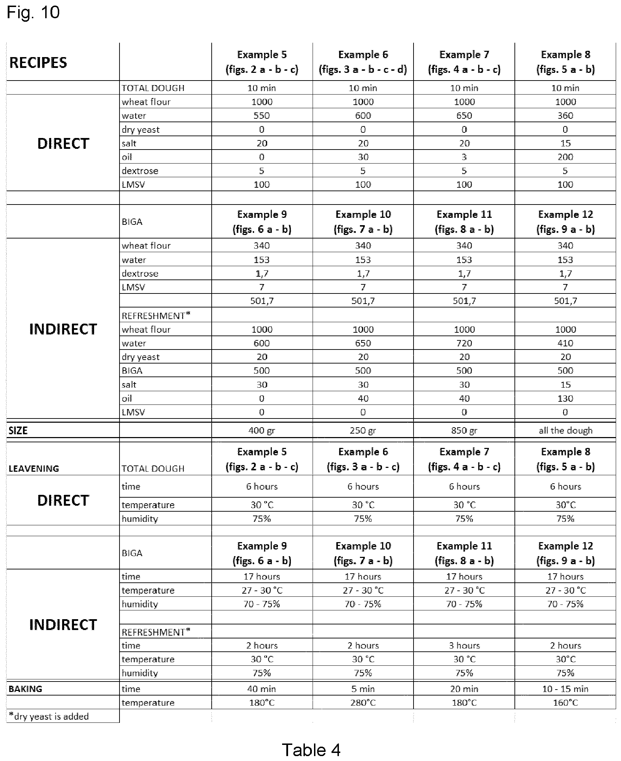

A summary diagram of the recipes and process (temperature/ leavening and baking times) used in the example according to direct and indirect method is provided in Table 4 in Fig. 10.
** With reference to Table 4, dextrose was added in the examples described as this sugar promotes the development of the yeast *K. humilis.* In the presence of other yeasts, the addition of this sugar may not be necessary.
*** With reference to Table 4, in Examples 9 - 12 (process with indirect method), conventional dry yeast (*Saccaromyces cerevisae*) was deliberately added in the refreshment step in order to simulate, in the various final references, the industrial process in which the leavening times, in this last step, must be short. The dried yeast cream is used in the pre-dough (Biga) preparation step which, having to develop over a much longer time with respect to the refreshment step, develops within it the metabolites necessary to characterise the aromatic aspect of the final product.

**Example 5:** Production of sandwich bread (loaf) using DIRECT METHOD.

### Ingredients:

Type 0 flour: 1000 gr - room temperature drinking water: 550 gr - sodium chloride: 20 gr - LMSV: 100 gr - dextrose 5 gr.

### Process:

After pouring the flour and dextrose into the mixing bowl, the LMSV previously dissolved in water was added and mixed all for 5 minutes. The salt was then added, extending the kneading cycle by a further 5 minutes.

The dough was then transferred to a work table, left to rest for 5 minutes and then divided into 400 gr portions. Each portion was rolled lengthwise so that all the air could escape and was then placed in the proper loaf tray and placed in the leavening cell at a temperature of 30°C and 75% RH, where it was kept for 6 hours.

Once the leavening was complete, baking was started for 40 minutes in an oven preheated to 180°C (internal product temperature at least 80°C).

The bread obtained using the described recipe and process was tasted by cutting the bread into 2 cm thick slices in order to determine the visual (colour), olfactory (aroma), gustatory (taste during chewing) and tactile (chewing and texture on the palate) aspects indicated in the following sensory analysis sheet used by a panel of experts in the sector.

**Table 5**

| **REQUIREMENTS** | **EVALUATION** | **Value 0** | **Value 5** | 1 | 2 | 3 | 4 | 5 |
|---|---|---|---|---|---|---|---|---|
| **VISUAL** | | | | | | | | |
| Colour | crust | BEIGE | dark amber | | | | | |
| Large bubbles | crust | none | present | | | | | |
| Development | crust | compact | empty | | | | | |

| **OLFACTORY** | | | | | | | | |
|---|---|---|---|---|---|---|---|---|
| Overall odour | crumb and crust | imperceptible-flat | intense | | | | | |
| Fragrance | crumb and crust | none | intense | | | | | |
| Toasted smell | crust | imperceptible | intense | | | | | |

| **GUSTATORY** | | | | | | | | |
|---|---|---|---|---|---|---|---|---|
| Sweet | crumb | imperceptible | intense | | | | | |
| Bitter | crumb | imperceptible | intense | | | | | |
| Acidic | crust | imperceptible | excessive | | | | | |
| Overall flavour | crust and crumb | weak | intense | | | | | |

| **STRUCTURAL** | | | | | | | | |
|---|---|---|---|---|---|---|---|---|
| Gumminess | crust | none | excessive | | | | | |
| Hardness | crust | excessive | optimal | | | | | |
| Crunchiness | crust | none | optimal | | | | | |
| Crumbliness | crust | crumbly, it crumbles | compact | | | | | |

### Visual aspects

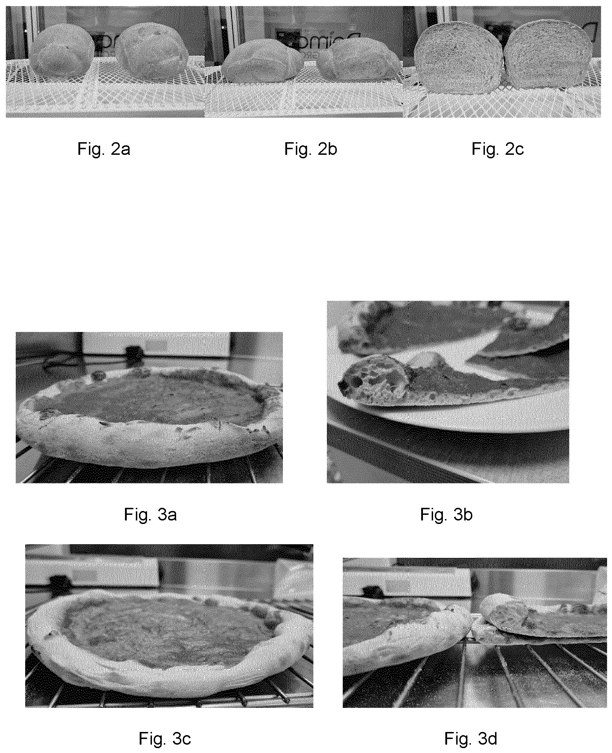

The resulting bread tended towards amber in colour with a development in volume typical of bread made with sourdough or classic brewer's yeast. The internal large bubbles were well distributed, allowing maintaining a certain softness and structure that did not disintegrate when cut. See Figures 2a, 2b, 2c.

### Outcome of sensory analysis

Sensory analysis revealed a hint of bread with typical slightly fruity aromas; on chewing, the product was easy to chew and not gummy. The taste recalled, although not excessively, that hint of acidity typical of breads made with sourdough.

**Example 6:** Production of dish pizza using DIRECT METHOD.

### Ingredients:

Type 0 flour: 1000 gr - room temperature drinking water: 600 gr - sodium chloride: 20 gr - LMSV: 100 gr - olive oil: 30 gr - dextrose 5 gr.

### Process:

After pouring the flour and dextrose into the mixing bowl, the LMSV previously dissolved in water was added and mixed all for 5 minutes. The salt was then added, extending the kneading cycle by a further 2.5 minutes; on completion of this mixing step, the olive oil was added and the resulting dough was mixed for a further 2.5 minutes.

The dough was then transferred to a work table, left to rest for 5 minutes and then divided into 250 gr portions. Each portion was rolled so that all the air could escape and round pieces were prepared, which were then placed in the proper pizza tray. The trays were placed and kept in the leavening cell at a temperature of 30°C and 75% RH for 6 hours.

Once the leavening process was complete, the dough was rolled out into the baking tin, tomato purée was added to it and it was baked for 5 minutes in a preheated oven at 280°C.

The sensory analysis, carried out on the pizza cut in such a way as to highlight the height and large bubbles on the crust, was entrusted to a panel of experts in the sector, who made their evaluations based on the parameters set out in the sensory sheet described above, excluding aspects relating to the crumb.

### Visual appearance

The crust was very pronounced, typical of Neapolitan pizza, despite being baked at a low temperature; the colour was homogeneous.

The product opened regularly and, despite the forced leavening, held its development without collapsing. The internal large bubbles were regular.

See Figures 3a, 3b, 3c, 3d.

### Outcome of sensory analysis

To taste the pizza had a distinctive flavour with a slightly fruity aroma and a slight but pleasant perception of acidity. The texture of the crust was fragrant and the inside was soft.

**Example 7:** Production of focaccia using DIRECT METHOD.

### Ingredients:

Type 0 flour: 1000 gr - room temperature drinking water: 650 gr - sodium chloride: 20 gr - LMSV: 100 gr - olive oil: 30 gr - dextrose 5 gr.

### Process:

After pouring the flour and dextrose into the mixing bowl, the LMSV previously dissolved in water was added and mixed all for 5 minutes. The salt was then added, extending the kneading cycle by a further 2.5 minutes; on completion of this mixing step, the olive oil was added and the resulting dough was mixed for a further 2.5 minutes.

The dough was then transferred to a work table, left to rest for 5 minutes and then divided into 850 gr portions. Each portion was rolled so that all the air could escape and round pieces were prepared, which were then placed in the proper baking tin. The tins were placed in the leavening cell at a temperature of 30°C and 75% RH, where they were kept for 3 hours.

The leavened piece was then tipped onto a baking tray greased with oil, spread across the whole surface and left to leaven under the above conditions for a further 3 hours.

Once the leavening was complete, baking was started for 20 minutes in an oven preheated to 180°C (internal product temperature at least 80°C).

Tasting the product involved cutting the focaccia in half to highlight the height and large bubbles. The product was also subjected to sensory analysis using the sensory sheet already described, excluding the crumb aspects.

### Visual appearance

The product was pleasantly amber with a homogeneous colour. The development in volume was homogeneous across the entire surface and this was also confirmed by the internal size of the large bubbles, which were present in pieces that were not large and inhomogeneous, but small and homogeneous. The crust was crispy and the inside soft.

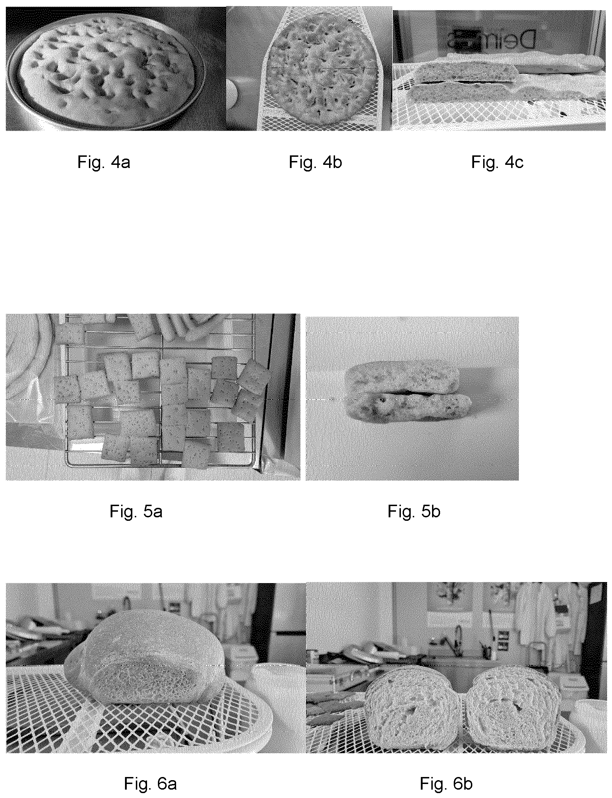

See Figures 4a, 4b, 4c.

### Outcome of sensory analysis

The product was not gummy, chewing was smooth and facilitated by the internal structure. The aromas and flavours were slightly fruity and the faintly acidic hint characterised the product without distorting it.

**Example 8:** Production of dry snacks with DIRECT METHOD.

### Ingredients:

Type 0 flour: 1000 gr - room temperature drinking water: 360 gr - sodium chloride: 15 gr - LMSV: 100 gr - olive oil: 200 gr - dextrose 5 gr.

### Process:

After pouring the flour and dextrose into the mixing bowl, the LMSV previously dissolved in water was added and mixed all for 2.5 minutes. The olive oil was then added, extending the kneading cycle by a further 2.5 minutes; upon completion of this mixing step, the salt was added and the resulting dough was mixed for a further 5 minutes.

The dough was then transferred to a work table, left to rest for 10 minutes and then broken with the help of a spatula into portions to be rolled out to about 4 mm. Once the desired thickness was reached, squares of about 3 cm per side were cut, the roller docker was applied, and the individual pieces were broken off so as not to stretch the product. The sheets were transferred to the proper baking tin and left in the leavening cell at a temperature of 30°C and 75% RH for 6 hours.

Once the leavening was complete, the baking was started for 10-15 minutes in an oven preheated to 160°C. Below are the results of the sensory analysis, carried out using the sensory sheet already described, omitting the part concerning the evaluation of the crumb.

### Visual appearance

Homogeneous, pleasantly amber colour with a fine internal structure. Generally, the dry snacks were much more open and crumbled easily.

See Figures 5a, 5b.

### Outcome of sensory analysis

In this product, the major advantages obtained were crispness and ease of chewing. The taste was very similar to bread, despite the high amount of oil in the recipe typical of dry snacks.

**Example 9:** Production of sandwich bread (loaf) using INDIRECT METHOD.

### Ingredients for pre-dough (BIGA):

Type 0 flour: 340 gr - room temperature drinking water: 153 gr - LSMV: 7 gr - dextrose 1.7 gr.

### Ingredients for final dough:

Type 0 flour: 1000 gr - room temperature drinking water: 600 gr - sodium chloride: 30 gr - dry yeast: 20 gr - BIGA.

### Process for preparing pre-dough (BIGA):

After pouring the flour and dextrose into the mixing bowl, the LMSV previously dissolved in water was added and mixed all for 4 minutes.

The dough with a grainy appearance was then placed in a covered bowl and transferred to the leavening cell for a period of 17 hours at a temperature of 27-30°C and humidity between 70 and 75%.

### Process for final dough:

The previously prepared flour and biga were transferred to the mixing bowl containing water in which the active dry yeast had previously been dissolved; the dough was mixed for 5 minutes, salt was added to it and it was mixed further for another 5 minutes.

The dough was then transferred to a work table, left to rest for 5 minutes and then divided into 400 gr portions. Each portion was rolled lengthwise so that all the air could escape and round pieces were prepared, which were then placed in the proper loaf tray. The trays were placed and kept in the leavening cell at a temperature of 30°C and 75% RH for 2 hours.

Once leavening was complete baking was started for 40 minutes in an oven preheated to 180°C (internal temperature at least 80°C).

The bread obtained using the described recipe and process was tasted by cutting the bread into 2 cm thick slices in order to determine the visual (colour), olfactory (aroma), gustatory (taste during chewing) and tactile (chewing and texture on the palate) aspects indicated in the sensory analysis sheet described above.

### Visual appearance

The resulting bread showed a slightly lighter amber colour compared to the direct dough test and a volume development typical of home-made bread. In this case, the combination of the product under test in the pre-dough and the dry yeast in the refreshment catalysed the thrust, resulting in a soft product with large bubbles.

See Fig. 6a and Fig. 6b.

### Outcome of sensory analysis

The product was fragrant on the outside, soft on the inside. A very interesting aspect, given the speed of the process.

**Example 10:** Production of dish pizza using INDIRECT METHOD.

### Ingredients for pre-dough (BIGA):

Type 0 flour: 340 gr - room temperature drinking water: 153 gr - LSMV: 7 gr - dextrose 1.7 gr.

### Ingredients for final dough:

Type 0 flour: 1000 gr - room temperature drinking water: 650 gr - sodium chloride: 30 gr - dry yeast: 20 gr - olive oil: 40 gr - BIGA.

### Process for pre-dough (BIGA):

After pouring the flour and dextrose into the mixing bowl, the LMSV previously dissolved in water was added and mixed all for 4 minutes.

The dough with a grainy appearance was then placed in a covered bowl and transferred to the leavening cell for a period of 17 hours at a temperature of 27-30°C and humidity between 70 and 75%.

### Process:

The previously prepared flour and biga were transferred to the mixing bowl containing water in which the active dry yeast had previously been dissolved; the dough was mixed for 5 minutes, salt was added to it and it was mixed further for another 2.5 minutes. Upon completion of this mixing step, the olive oil was added and the resulting dough was mixed for a further 2.5 minutes. The dough was then transferred to a work table, left to rest for 5 minutes and then divided into 250 gr portions. Each portion was rolled so that all the air could escape and round pieces were prepared, which were then placed in the proper pizza tray. The trays were placed and kept in the leavening cell at a temperature of 30°C and 75% RH for 2 hours.

Once the leavening was complete, the dough was rolled out into the baking tin and baked for 5 minutes in a preheated oven at 280°C (crust temperature at least 80°C).

The sensory analysis was carried out on the pizza cut in such a way as to highlight the height and large bubbles on the crust, and the sensory sheet described above was used by the panel of experts in the sector, excluding aspects related to the crumb.

### Visual appearance

The crust was pronounced despite being baked at low temperature and the colour was homogeneous.

The product opened regularly and, despite the forced leavening, held its development without collapsing. The internal large bubbles were regular and slightly more open bubbles were noticeable due to the combination of dry yeast and the yeast under examination.

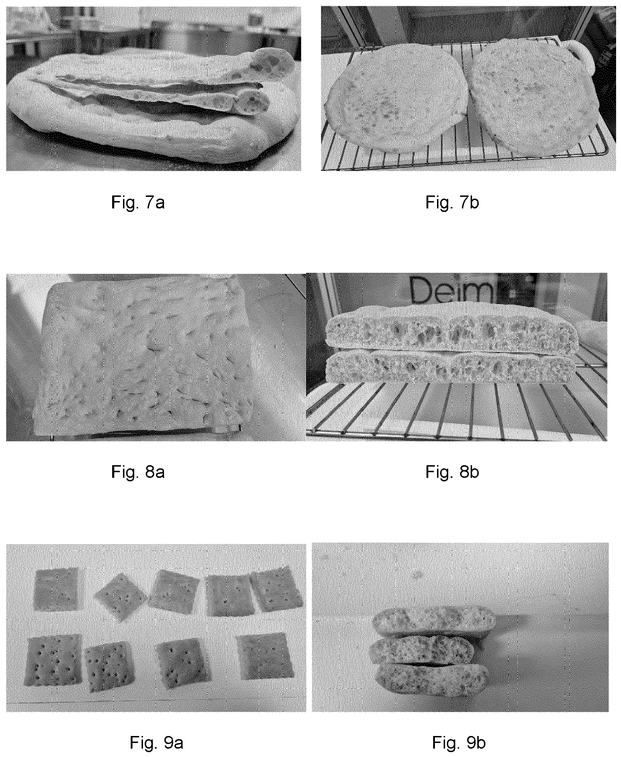

See Figures 7a, 7b.

### Outcome of sensory analysis

The product had hints of pizza, which are uncommon for such a short process. Interesting aspects were its fragrance and ease of chewing in the mouth. **Example 11:** Production of Focaccia using INDIRECT METHOD.

### Ingredients for pre-dough (BIGA):

Type 0 flour: 340 gr - room temperature drinking water: 153 gr - LSMV: 7 gr - dextrose: 1.7 gr.

### Ingredients for final dough:

Type 0 flour: 1000 gr - room temperature drinking water: 720 gr - sodium chloride: 30 gr - dry yeast: 20 gr - olive oil: 40 gr - BIGA.

### Process for pre-dough (BIGA):

After pouring the flour and dextrose into the mixing bowl, the LMSV previously dissolved in water was added and mixed all for 4 minutes.

The dough with a grainy appearance was then placed in a covered bowl and transferred to the leavening cell for a period of 17 hours at a temperature of 27-30°C and humidity between 70 and 75%.

### Process for final dough:

The previously prepared flour and biga were transferred to the mixing bowl containing water in which the active dry yeast had previously been dissolved; the dough was mixed for 5 minutes, salt was added to it and it was mixed further for another 2.5 minutes. Upon completion of this mixing step, the olive oil was added and the resulting dough was mixed for a further 2.5 minutes.

The dough was then transferred to a work table, left to rest for 5 minutes and then divided into 850 gr portions. Each portion was rolled so that all the air could escape and round pieces were prepared, which were then placed in the proper baking tin. The trays were placed in the leavening cell and kept at a temperature of 30°C and 75% RH for 1.5 hours.

The leavened piece was then tipped onto a baking tray greased with oil, spread across the whole surface and left to leaven under the above conditions for a further 1.5 hours.

Once leavening was complete baking was started for 20 minutes in an oven preheated to 180°C (internal temperature at least 80°C).

The product was tasted by cutting the focaccia in half in order to highlight the height and large bubbles on the crust. The product was also subjected to sensory analysis using the sensory sheet already described, excluding the crumb part.

### Visual appearance

The product was not too amber in colour but with a very pronounced development of large bubbles. Again, the combination of the yeast under examination and the dry yeast was interesting in terms of yield and working time.

See Figures 8a, 8b.

### Outcome of sensory analysis

The product was very soft and easy to chew.

**Example 12:** Production of dry snacks using INDIRECT METHOD.

### Ingredients for pre-dough (BIGA):

Type 0 flour: 340 gr - room temperature drinking water: 153 gr - LSMV: 7 gr - dextrose: 1.7 gr.

### Ingredients for final dough:

Type 0 flour: 1000 gr - room temperature drinking water: 410 gr - sodium chloride: 20 gr - dry yeast: 15 gr - olive oil: 130 gr - BIGA.

### Process for pre-dough (BIGA):

After pouring the flour and dextrose into the mixing bowl, the LMSV previously dissolved in water was added and mixed all for 4 minutes.

The dough with a grainy appearance was then placed in a covered bowl and transferred to the leavening cell for a period of 17 hours at a temperature of 27-30°C and humidity between 70 and 75%.

### Process:

The previously prepared flour and biga were transferred to the mixing bowl containing water in which the active dry yeast had previously been dissolved; the dough was mixed for 2.5 minutes, olive oil was added and it was mixed further for another 2.5 minutes. Upon completion of this mixing step, the salt was added and the resulting dough was mixed for a further 5 minutes.

The dough was then transferred to a work table, left to rest for 10 minutes and then broken with the help of a spatula into portions to be rolled out to about 4 mm. Once the desired thickness was reached, squares of about 3 cm per side were cut, the roller docker was applied, and the individual pieces were broken off so as not to stretch the product. The sheets were transferred to the proper baking tin and left in the leavening cell at a temperature of 30°C and 75% RH for 2 hours.

Once the leavening was complete, baking was started for 10-15 minutes in an oven preheated to 160°C.

### Visual appearance

Amber colour and pronounced development. Slightly larger bubbles compared to the indirect method.

See Figures 9a, 9b.

### Outcome of sensory analysis

Less pronounced taste. The product was crumbly and even crispy at first bite. Again, the high oil content affected the taste.

### Example 13 - comparative: fermentation trials with yeast Kluyveromyces marxianus.

### Leavening capacity

A dough of flour, water and *Kluyveromyces marxianus* yeast was prepared, distributed as follows:
- Flour 1000 gr
- Water 600 gr
- Yeast 100 gr.

An aliquot of 150 gr dough was placed in a measuring container in order to assess the increase in volume over time. The container was covered with a plastic film and placed in the leavening cell at 30°C and 75% humidity for 18 hours.

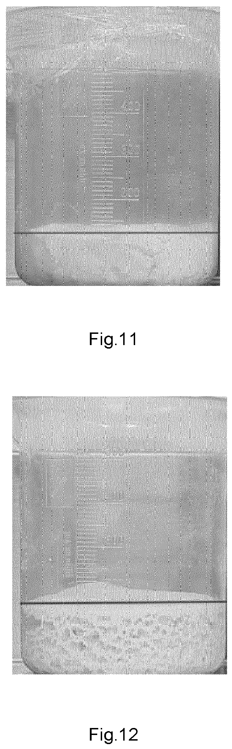

At the end of the incubation, the increase in volume of the dough inoculated with only *Kluyveromyces marxianus* (Figures 11 and 12) was much lower (approx. 75%) than the increase in volume obtained by inoculating the composition *Kluyveromyces marxianus* and *Kazachstania humilis* (volume tripled already after 4 hours of leavening, Example 4 and Figure 1c).

In order to obtain adequate leavening of the dough, the yeast *Kluyveromyces marxianus* cannot therefore be used alone but must be combined with other yeasts in order to increase the fermentation process and the amount of carbon dioxide produced.

See Fig. 11 and Fig. 12.

The pH values obtained, which are linked to yeast activity and are important for the sensory characterisation of the product, are also lower in the dough inoculated with only *Kluyveromyces marxianus,* compared to the dough obtained with the yeast composition.

| **Yeast** | **pH t0** | **pH at end of incubation** |
|---|---|---|
| *Kluyveromyces marxianus* | 5.9 | 5.3 after 18 hours of fermentation |
| *Kluyveromyces marxianus* + *Kazachstania humilis* | 5.9 | 4.8 after 8 hours of fermentation with lower yeast dosage |

### Baking test with only Kluyveromyces marxianus yeast

### Ingredients:

Type 0 flour: 1000 gr, room temperature drinking water: 600 gr, *Kluyveromyces marxianus* yeast: 100 gr, sodium chloride: 20 gr.

### Process:

After pouring the flour into the mixing bowl, the *Kluyveromyces marxianus* yeast previously dissolved in water was added and mixed all for 5 minutes. The salt was then added, extending the kneading cycle by a further 5 minutes. The dough was then transferred to a work table, left to rest for 5 minutes and then divided into 500 gr portions. Each portion was then placed in the leavening cell at a temperature of 30°C and 70% relative humidity for 24 hours. Once the leavening was complete, baking was started for 40 minutes in an oven preheated to 180°C.

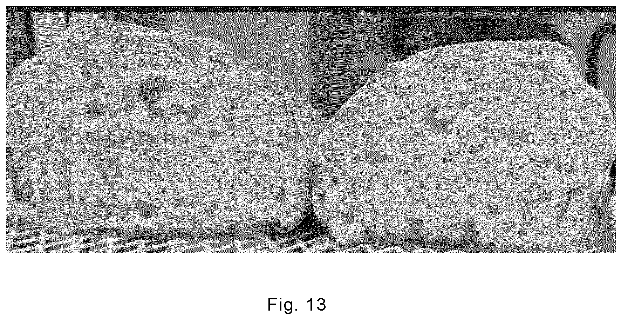

Figure 13 shows the bread obtained with only *Kluyveromyces marxianus* yeast. As can be seen, the leavening (increase in volume) is limited and, above all, inhomogeneous compared to the bread obtained with the composition *Kluyveromyces marxianus* and *Kazachstania humilis* (Figure 2c, Example 5). In addition, the surface of the bread is uneven.

See Fig. 13.

In conclusion, Example 13 clearly shows the effect of combining the selected yeasts of the invention.

## Claims

1. Yeast composition comprising the combination or consisting of the combination of at least two yeasts selected from the species listed below or belonging to other non*-Saccharomyces* yeast species:
- *Kluyveromyces marxianus,*
- *Kazachstania humilis,*
- *Kazachstani exigua,*
- *Torulaspora delbrueckii,*
- *Lanchancea thermotolerans.*

2. Yeast composition according to claim 1, comprising the combination or consisting of the combination of at least two yeasts selected from the species listed below:
- *Kluyveromyces marxianus,*
- *Kazachstania humilis,*
- *Kazachstani exigua,*
- *Torulaspora delbrueckii,*
- *Lanchancea thermotolerans.*

3. Yeast composition according to any one of claims 1 to 2, wherein one yeast is *Kluyveromyces marxianus* or *Kluyveromyces marxianus subsp. Fragilis.*

4. Yeast composition according to any one of claims 1 to 3, where the yeast is *Kazachstania humilis.*

5. Yeast composition according to any one of claims 1 to 4, not comprising yeasts of the *Saccharomyces* species.

6. Yeast composition according to any one of claims 1 to 5, not comprising yeasts of the *Saccharomyces cerevisiae* species.

7. Process for preparing the yeast composition according to any one of claims 1 to 6, comprising the following steps:
- for each yeast performing the following steps a) to b):
a) fermenter biomass production in appropriate culture media;
b) the biomass from step a) is then concentrated by centrifugation to obtain the biomass in the form of yeast cream;
c) the yeast creams from step b) are mixed together in the appropriate concentrations and other ingredients are added until a homogeneous dough is obtained;
d) the dough obtained in step c) is rolled, generating a sheet not less than 10 mm thick;
e) the sheet of dough obtained in step d) is placed in perforated trays and dried at a temperature less than 28°C and relative humidity less than or equal to 30% for a maximum cycle of 48 hours until the product reaches a final moisture content of less than 35% by weight;
f) the product of step e) is unloaded, crushed and packaged.

8. Process according to claim 7, wherein in step c) the other dry ingredients are dried rice flour and/or dried wheat flour.

9. Process according to any one of claims 7 to 8 wherein, in case the composition according to any one of claims 1 to 6 comprises *Kluyveromyces marxianus* yeast, in step a) the culture medium is the whey from the end of cheese processing or the scum derived from the production of ricotta.

10. Process for the preparation of baked products, according to the direct method, comprising the following steps:
A-1) preparing the dough with a yeast composition according to any one of claims 1 to 6;
B-1) leaving the inoculated dough to leaven or ferment at a temperature comprised between 27°C and 33°C and a relative humidity comprised between 65% and 80%;
C-1) baking the inoculated and leavened dough from step B-1) to provide the baked product.

11. Process for the preparation of baked products, according to the indirect method, comprising the following steps:
A1-1) preparing a pre-dough (biga) with a yeast composition according to any one of claims 1 to 6;
B1-1) leaving the inoculated pre-dough to leaven or ferment at a temperature comprised between 27°C and 33°C and a relative humidity between 65% and 80%;
C1-1) preparing the final dough comprising biga, flour, water, dry yeast and any other ingredients and leaving it to leaven at 30°C and 75% RH;
D1-1) baking the inoculated and leavened dough from step C-1) to provide the baked product.

12. Food inoculum comprising the yeast composition according to any one of claims 1 to 6.

13. Dough for baked products inoculated with the yeast composition according to any one of claims 1 to 6.

14. Use of a yeast composition according to any one of claims 1 to 6 for the preparation of baked products.

15. Use according to claim 14, wherein the yeast composition according to any one of claims 1 to 6 is used as a food inoculum and/or as a leavening agent for the preparation of baked products.
